# EUROPÄISCHE PATENTANMELDUNG

(11) **EP 1 469 491 A2**
(43) Veröffentlichungstag der Anmeldung: **20.10.2004**
(21) Anmeldenummer: 04005245.8
(22) Anmeldetag: 05.03.2004
(51) Int. Cl.: H01G 9/00

(54) **Verbundelement und seine Verwendung**

(30) Priorität: 15.03.2003 DE 10311487
(71) Anmelder: Forschungszentrum Karlsruhe GmbH, 76133 Karlsruhe (DE)
(72) Erfinder: Kramer, Dominik, Dr., 76344 Eggenstein-Leopoldshafen (DE); Nadar, Raghavan, Viswanath, Dr., 76344 Eggenstein-Leopoldshafen (DE); Weissmüller, Jörg, Dr., 76137 Karlsruhe (DE)
(74) Vertreter: Rückert, Friedrich, Dr.

(57) **Zusammenfassung**

Die Erfindung betrifft ein Verbundelement und seine Verwendung.

Aufgabe der Erfindung ist es, einen neuen Verbundkörper bereitzustellen, der ladungsinduzierte Volumenänderungen direkt nutzbar macht, und verschiedene Verwendungsmöglichkeiten dafür anzugeben.

Gelöst wird diese Aufgabe durch ein Verbundelement bestehend aus mindestens zwei Schichten, von denen eine Schicht aus einem porösem, elektrisch leitenden, nanoskaligen Material besteht, das von einem Elektrolyten durchdrungen sich bei elektrischer Aufladung dehnt oder kontrahiert, und die andere Schicht aus inertem Trägermaterial besteht, dadurch gekennzeichnet, dass das inerte Trägermaterial biegsam und gegen Zugbelastung weitgehend starr ist.

## Beschreibung

Die Erfindung betrifft ein Verbundelement nach dem Oberbegriff des Patentanspruchs 1, wie es aus der DE 199 52 447 C1 bekannt ist, und seine Verwendung.

Es gibt eine Vielzahl von Voltmetern (auch digitaler Art), insbesondere das auf der elektrostatischen Abstoßung beruhende Elektrometer.

Sensoren basierend auf Nano-Materialien sind aufgrund der großen Oberfläche besonders empfindlich und sind Stand der Technik.

Mikromechanische, piezoelektrische, magnetostriktive und elektrochemische Aktuatoren setzen ebenfalls elektrische Energie in Bewegung um.

Aus W. Takashima et al, Synthetic Metals 71 (1995) 2265-2266, A. Mazzoldi A. Della Santa, D. De Rossi, Conducting Polymer Actuators: Properties and Modeling, in: Y. Osada, D. E. De Rossi, Polymer Sensors and Actuators, Berlin, Heidelberg, Springer 2000 sind Polymer-Aktuatoren bekannt, die ebenfalls in Elektrolyten betrieben werden.

Die Verwendung von Oberflächenladungen zur Änderung der elektronischen Struktur ist aus H. Gleiter, J. Weissmüller, O. Wollersheim, R. Würschum, Acta Mater. 49 (2001) 737-745; und H. Gleiter, Scripta Mater. 44 (2001) 1161-1168 bekannt. Die Änderung des Volumens in nanokristallinem Material folgt auch aus Röntgenmessungen an nanokristallinem Platin (R. N. Viswanath, J. Weissmüller, R. Würschum, H. Gleiter, Mat. Res. Soc. Proc. Vol. 676 (2001) Y6.10.1). Bisher wurde aber noch keine konkrete Anordnung vorgeschlagen.

Aufgabe der Erfindung ist es, einen neuen Verbundkörper bereitzustellen, der die oben angesprochenen Effekte direkt nutzbar macht, und verschiedene Verwendungsmöglichkeiten dafür anzugeben.

Gelöst wird diese Aufgabe durch die Merkmale der Patentansprüche 1 und 6 bis 8. Die Unteransprüche beschreiben vorteilhafte Ausgestaltungen der Erfindung.

Insbesondere folgende Verwendungen sind möglich:
- Spannungsanzeige: Die Anordnung eignet sich als Voltmeter, d. h. zur Anzeige oder Aufzeichnung einer elektrischen Spannung, gerade auch in elektrochemischen Umgebungen.
- Sensor für Konzentration an Ionen und Adsorbentien, wobei die Anzeige direkt durch die Stellung unserer Entwicklung erfolgen kann.
- Aktuator, da elektrische Arbeit (Anlegen einer elektrischen Spannung; der daraus resultierende Stromfluss bewirkt eine elektrische Aufladung) in Bewegung umgesetzt wird. Verschiedene Anwendungen sind die Bewegung mikroskopischer Ventile, adaptiver Optiken oder intelligenter Materialien, die bei Bedarf die Form verändern, sowie künstliche Muskeln für Miniaturroboter oder Kleinprothesen.
- Schalter und Regler etwa zum Öffnen und Schließen eines Stromkreises, als Stellelement für Ventilklappen. Aufgrund der Sensoreigenschaften der erfindungsgemäßen Vorrichtung kann der Schalter selbsttätig wirken und damit auch zur Regelung benutzt werden. So kann sie etwa zur Konstanthaltung einer Elektrolyt-Konzentration dienen, indem sie eine Einlassventilklappe für eine Salzlösung bewegt oder den Stromkreis einer Pumpe schließt, z.B. um in einem Galvanikbad die Metallionen-Konzentration konstant zu halten.
- Bewegungswandler: Analog dem Piezoelement sollte auch eine Umwandlung von Bewegung bzw. Kraft oder Beschleunigung in Spannung möglich sein, so dass die Anordnung als Bewegungsoder Kraftsensor dienen kann.
- Dosiereinheit: Die Bewegung des Elements kann auch zur gezielten Abgabe von Ionen in die Lösung genutzt werden.

Zentrales Element der Erfindung ist poröses, elektrisch leitendes, nanoskaliges Material, bevorzugt ein Edelmetall, das von einem Elektrolyten durchdrungen wird. Wird dieses Material durch eine elektrische Spannung gegenüber einer Gegenelektrode, die in denselben Elektrolyten taucht, elektrisch aufgeladen, dehnt oder kontrahiert sich das nanoporöse Material. Aufgrund des außerordentlich großen Anteils an Oberflächenatomen bei Nano-Materialien ist hier eine Änderung der Geometrie - Gitterkonstanten und Form, Details der Porenstruktur - möglich.

Die aus der Aufladung resultierende Dehnung/Kontraktion kann zur Anzeige einer Spannung verwendet werden. Im einfachsten Fall ist das nanoporöse Material auf einen dünnen Streifen z. B. aus Metall aufgebracht, der sich durch die Volumenänderung verbiegt. Dadurch kann der Metallstreifen ähnlich einem Bimetallthermometer für die Temperatur als Zeiger für die Spannung verwendet werden. Durch eine Kombination mit einem Schreibstift und einer Papiervorschubeinrichtung ist auch eine Aufzeichnung des Spannungswertes möglich. Eine anschließende Umsetzung der Auslenkung, z.B. eine mechanische Verstärkung des Signals über einen Hebel oder eine Umwandlung in elektrische oder digitale Signale, ist möglich z. B. mit Technologien, wie sie auch in Computermäusen zur Umwandlung von Bewegung in digitale Signale verwendet werden.

Die Volumenänderung des Materials und damit die Auslenkung des Metallstreifens hängt - bei konstanter Spannung zu Gegenelektrode - von der Konzentration der Ionen im Elektrolyten und von der eventueller Adsorbentien ab. Daher kann die Anordnung auch als Sensor/Messgerät für diese Konzentrationen dienen.

Wiederum ist durch Kombination mit einem Schreibstift und einer Papiervorschubeinrichtung auch eine Aufzeichnung der Konzentration möglich, und wiederum kann auch eine mechanische Verstärkung des Signals über einen Hebel oder eine Umwandlung in elektrische oder digitale Signale erfolgen.

Die Anordnung kann auch als Aktuator dienen, da sie elektrische Spannung bzw. die daraus resultierende elektrische Ladung in Bewegung umsetzt, und kann daher als Antriebselement dienen (Muskel aus Metall). Mit Hilfe kurbelwellenähnlicher Kraftübertragung und einer Wechselspannung sind auch Rotationen und damit die Konstruktion eines Motors möglich.

Da die Anordnung gleichzeitig sowohl Sensor als auch sich bewegendes Element ist, kann sie auch als selbsttätig wirkender Schalter dienen und z.B. bei Änderung der Konzentration ein Ventil oder einen elektrischen Stromkreis schließen ähnlich den Bimetallstreifen, die z.B. in Heizquellen zur einfachen Thermostatisierung genutzt werden.

Bei Änderung der Geometrie des Materials erfolgt die Adsorption oder Desorption von Ionen und damit eine Potentialänderung. Damit ist die Umsetzung von Bewegung in eine Spannung möglich. Eine mögliche Anwendung wäre z.B. in Beschleunigungssensoren (z.B. zur Auslösung eines Airbags) oder die Umwandlung von mechanischer in elektrische Arbeit (Generator).

Bei Änderung der Geometrie des Materials erfolgt die Adsorption oder Desorption von Ionen. Eine Dosierung von Ionen in die Lösung aufgrund der Bewegung ist damit möglich.

Für die Erfindung kann im Prinzip jedes nanoporöse (Edel-)Metall oder ein nanostrukturierter Halbleiter als reagierendes Material verwendet werden. Gerade die mögliche Verwendung von Elementen wie Gold oder Platin unterscheidet sie daher völlig von den Piezokristallen und von Polymer-Aktuatoren.

Das Funktionsprinzip der Erfindung beruht auf der Volumen- bzw. Längenänderung von nanoskaligem Material, d.h. auf Strukturen mit einer Größe von wenigen Nanometern. Daher sollte eine Miniaturisierung entsprechender Geräte prinzipiell möglich sein, z.B. Ausgestaltungen auf einer Skala < 1 µm. Aus dem Patent DE 199 52 447 C1 geht zwar die prinzipielle Eignung der Anordnung *Vorrichtung mit einer Elektrode, einer schwammartigen perkolierenden Schicht, einem Elektrolyten und einem Mittel zum Anlegen einer Spannung* für verschiedenste Zwecke hervor, dort wird aber keine praktische Ausgestaltung angegeben.

Erfindungsgemäße Anordnungen bieten eine bestechend einfache und direkte Spannungsanzeige und sind daher wesentlich einfacher, kostengünstig in der Herstellung und unempfindlicher als viele herkömmliche Voltmeter. Gegenüber dem Elektrometer hat sie den Vorteil, dass sie in Elektrolyten eingesetzt werden kann; z.B. ist ein Eintauchen (mit anodischer Polarisation) in ein Galvanikbad denkbar. Ein Hauptvorteil der Anordnung ist die Möglichkeit der direkten Anzeige ohne aufwendige Detektorelektronik.

Mikromechanische, piezoelektrische, magnetostriktive und elektrochemische Aktuatoren müssen in Details wie Preis-/ Kosten-Relation, erreichbarer Auslenkungsweg und -kraft, Korrosionsbeständigkeit u. a. unterschieden werden. Als Beispiel sei der Vergleich mit einem elektrochemischem Aktuator gegeben: Dieser erfordert wegen der Verwendung der Gasentwicklung ein geschlossenes System (üblicherweise verschweißtes Edelstahlgehäuse). Dies ist z.B. für den hier beschriebenen Sensor nicht notwendig, wenn er ohnehin in einem Elektrolyten betrieben wird.

Darüber hinaus sind Polymer-Aktuatoren in aggressiven Medien nicht verwendbar.

Bisherige Lösung ist in der Regel die Kombination von Sensor, Detektorelektronik, Steuerelektronik und Steuerelement. Unsere Anordnung kann bei einfachen Regelaufgaben diese aufwendige Kombination ersetzen.

Mit der erfindungsgemäßen Vorrichtung lassen sich höhere Stromstärken erreichen als mit Piezokristallen (die dafür sehr hohe Spannungen liefern können).

Typisch für die vorliegende Erfindung sind zunächst, wie in der DE 199 52 447 C1 beschrieben, die Kombination von nanoporösem Material, einem diesen möglichst vollständig benetzendem Elektrolyten und einer ebenfalls vom selben Elektrolyten benetzten Gegenelektrode sowie einer Spannungsquelle, die Verwendung von leitenden nanoskaligen Materialien aller Art (bevorzugt Edelmetallen). Dies unterscheidet die vorliegende Erfindung von Polymer-Aktuatoren und von Kohlenstoff-Nanoröhren-Aktuatoren (R. H. Baughman et. Al., Carbon Nanotube Actuators, Science 284 (1999) 1340-1344).

Typisch ist auch, dass die Änderung der Geometrie (Länge, Volumen oder Form) des nanoporösen Materials ausgenutzt wird im Gegensatz z.B. zu Sensoren, die auf etwa elektrochemischer Detektion beruhen.

Neu im Vergleich zur DE 199 52 447 C1 ist insbesondere die vorgeschlagene Anordnung, bei der das nanoskalige, schwammartige Material auf einen biegsamen Träger (starr gegen Dehnung) aufgebracht ist, so dass die gesamte Anordnung als Zeiger wirken kann bzw. dass der erhaltene Bewegungsweg gegenüber der bloßen Dehnung des Nano-Materials verstärkt wird: Bewegungswege der Zeigerspitze von Millimetern wurden demonstriert, d.h. die Auslenkung ist mit bloßem Auge gut sichtbar, so dass eine Verwendung ohne weitere Verstärkung möglich ist.

Neu ist auch der Vorschlag, einen Wegaufnehmer wie z.B. ein Dilatometer oder einen Positionssensor zur empfindlichen Messung der Volumen- bzw. Längen- oder Lagenänderung zu benutzen.

Insbesondere kann mit der vorliegenden Erfindung in vielen Fällen ein sehr einfacher Aufbau erreicht werden:
- Die direkte Umsetzung der gemessenen Spannung in ein Zeigersignal ist möglich.
- Die direkte Umsetzung von Konzentrationen in ein Zeigersignal ist möglich.
- Im Vergleich zu mikromechanischen Geräten und Motoren sehr einfacher Aufbau, keine Verwendung von Magneten.
- Bei Verwendung von nanoskaligen Edelmetallen hohe Korrosionsbeständigkeit, die auch eine Verwendung in aggressiven Medien ermöglicht.
- Die Konzentration oder die Spannung kann direkt zur Regelung und Steuerung von Ventilen o. ä. verwendet werden, ohne dazu Magneten verwenden zu müssen.

Die erfindungsgemäße Vorrichtung verträgt oder erzeugt relativ hohe Stromstärken bei kleinen Spannungen, im Gegensatz etwa zu Piezoelementen. Mit der Spannung einer Taschenlampenbatterie können z.B. mehrere hintereinander geschaltete Aktuatoren betrieben werden. Für die bisher demonstrierten Aktuatoren war eine Spannung von 0.75 V ausreichend, so dass sich mit einer Batterie zwei in Reihe geschaltete Aktuatoren oder Sensoren betreiben lassen, oder vier, wenn auch beide Gegenelektroden entsprechend ausgeführt sind. Aktuatoren und Sensoren, die komplett aus Gold bestehen, können aber auch direkt mit 1.5 V betrieben werden.

Als Aktuator bietet die vorliegende Erfindung mit Längenänderungen, die in einzelnen Fällen im Prozentbereich liegen können, eine wertvolle Ergänzung zu den bisherigen Möglichkeiten; Bewegungswege von Millimetern sich bei der Biegestreifenanordnung ohne weitere Umsetzung möglich. Wird der Aktuator in einer Lösung betrieben, in der keine Faradayschen Prozesse stattfinden, so bleibt die Ladung auf der Oberfläche konstant, d.h. nach Abtrennen der Strom- oder Spannungsquelle behält der Aktuator auch ohne Energiezufuhr seine Position bei.

Zur Verwendung als Sensor ist anzumerken, dass die vorliegende Vorrichtung, wie viele andere Sensoren auch, wenig spezifisch für eine bestimmte Ionen- oder Molekülsorte ist. Daher ist in vielen Fällen ohnehin eine Kombination von mehreren Sensoren erforderlich, und daher besteht auch der Bedarf in der Sensorik, möglichst viele verschiedene Messprinzipien zur Verfügung zu haben. Insofern kann unsere Erfindung auch einen Beitrag zur Bestimmung in komplexen Lösungen leisten. Bei einfach zusammengesetzten Lösungen ist unsere Erfindung auch allein zur Konzentrationsbestimmung verwendbar.

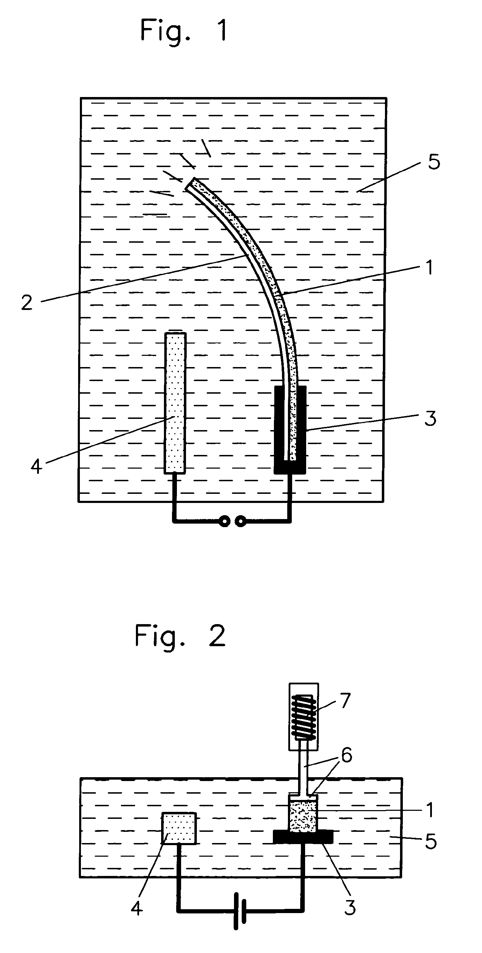

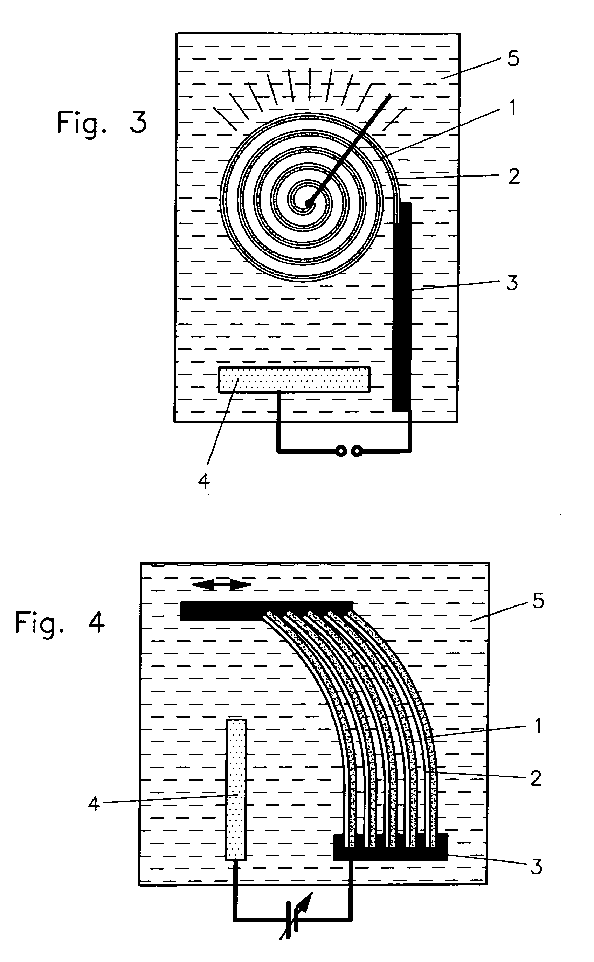

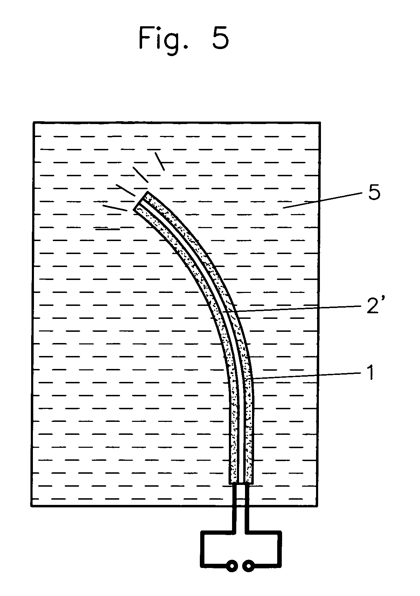

Die Erfindung wird im Folgenden anhand von Ausführungsbeispielen mit Hilfe der Figuren näher erläutert. Dabei zeigen die Figuren 1 bis 5 schematisch verschiedene Ausführungsbeispiele unterschiedlich ausgestalteter Verbundelemente.

**Fig. 1** zeigt ein Voltmeter bzw. einen Sensor mit einem Bimetall-Zeiger aus Nano-Material auf einer biegsamen, aber wenig dehnbaren Unterlage.

**Fig. 2** zeigt einen Sensor, bei dem die Volumenausdehnung über einen induktiven Wegaufnehmer erfasst wird. Andere Wegaufnehmer sind auch möglich.

**Fig. 3** zeigt ein Voltmeter bzw. einen Sensor mit einer Bimetall-Spirale (Aufbau wie bei Fig. 1), die einen Zeiger um eine feste Achse dreht. Anstelle der Spirale kann auch eine Bimetall-Wendel verwendet werden.

**Fig. 4** zeigt einen Aktuator, bei dem durch die Verwendung mehrerer Biegestreifen die erreichbare Kraft vervielfältigt wird.

**Fig. 5** zeigt ein Voltmeter bzw. einen Sensor mit einem Zeiger aus einem beidseitig mit Nano-Material beschichteten Isolator.

Eine erfindungsgemäße Vorrichtung besteht zunächst - wie in DE 199 52 447 C1 beschrieben - aus folgenden wesentlichen Teilen:
- Elektrode aus nanopörösem Material;
- Elektrolyt, der die Elektrode zumindest teilweise benetzt;
- Gegenelektrode, die ebenfalls zumindest teilweise vom selben Elektrolyten benetzt wird und
- Spannungsquelle (bzw. die beiden Kontakte, zwischen denen die Spannung bestimmt werden soll) zwischen den Elektroden.

Das poröse Material (Aktor-Elektrode) muss elektrisch leitend sein und besteht bevorzugt aus Edelmetall oder einer Legierung wie z.B. Platin, Gold oder Gold-Silber-Legierung, Edelstahl. Je nach gewünschtem Spannungsbereich sind aber auch unedlere Metalle verwendbar. Wichtig sind eine sehr große Oberfläche des Materials, das schwammartig (perkolierend) vom Elektrolyten durchtränkt wird, und ein großer Anteil an Oberflächenatomen in diesem Material. Daher muss das Material nanoskalig sein, d.h. der Durchmesser eines Stücks des Materials sollte im Nanometerbereich liegen. Der Porendurchmesser selbst ist für die Funktionsfähigkeit an sich weniger entscheidend. Er wird aber idealerweise ebenfalls im oberen Nanometerbereich oder etwas darüber liegen, um eine hohe Dichte zu erreichen. Bei gleichbleibendem Außenvolumen des porösen Materials ermöglichen höhere Dichten größere übertragbare Kräfte. Die Poren sollten aber auch nicht zu klein sein, da sonst die Diffusion der Ionen ins Innere der porösen Struktur über die Ansprechzeit entscheiden kann.

Die Herstellung des nanoskaligen Materials kann erfolgen z. B. durch Gasphasenkondensation, durch Auslaugen aus einer Legierung bzw. Mischung (z.B. elektrochemisches Auslaugen von Silber aus Silber-Gold-Legierung) oder durch elektrochemische Abscheidung.

Der Elektrolyt, d. h. die ionenleitende und ionenhaltige Lösung, bedeckt die Aktor-Elektrode vollständig oder weitgehend, da die bedeckte Oberfläche für die Nutzung entscheidend ist. Der Elektrolyt sollte an der Aktor-Elektrode durch die angelegten Spannungen nicht zersetzt werden, d.h. es sollte an der Aktor-Elektrode vor allem eine Doppelschichtaufladung und weniger eine Faradaysche Reaktion ablaufen (Arbeit im Doppelschichtbereich, kapazitive Ladung statt Faradayprozess).

Der Elektrolyt eines Aktuators sollte eine möglichst große (I-onen)Leitfähigkeit haben, um die ohmschen Verluste in der Lösung möglichst gering zu halten. Außerdem ermöglichen hohe Ionen-Konzentrationen eine Doppelschichtaufladung ohne weite Diffusionswege.

Da das Vorhandensein eines Elektrolyten wesentlich ist, kann eine Kapselung des Gerätes zur Vermeidung von Verlusten durch Auslaufen oder Verdunsten notwendig sein.

Die Gegenelektrode besteht aus gut elektronenleitendem Material, z.B. Metalle wie Gold oder Platin. Aber auch unedlere Metalle, Kohlenstoff oder leitfähige Polymere, die im Elektrolyten nicht korrodieren, können verwendet werden.

Wenn die Gegenelektrode großflächig ausgeführt wird, etwa durch Verwendung von ebenfalls nanoporösem oder rauem Material, können dort hohe Strom- und Ladungsdichten vermieden werden, was die erforderlichen Spannungen senkt.

Spannungs- und zugleich Stromquelle bzw. Kontakte mit der zu vermessenden Spannung für den Betrieb als Voltmeter: Soll die Bewegung des Aktuators kontinuierlich erfolgen, muss die Spannungsquelle entsprechend fein reguliert werden können; soll die Bewegung zwischen zwei Positionen erfolgen, ist dies nicht erforderlich.

Neu und wesentlich sind die folgenden Anordnungen:
- Die Verwendung in Biegestreifenanordnung.
- Die Kombination mit einem Wegaufnehmer oder Positionssensor.

Das nanoskalige Material befindet sich auf einem Biegestreifen, der durch seine Verbiegung die Messgröße (Spannung, Konzentration) anzeigen kann (direkte Verwendung als Zeiger) oder durch die Verbindung mit einem Schreibstift eine Aufzeichnung ermöglicht, oder der als Aktuator eine gegenüber der Basiserfindung verstärkte Bewegung ermöglicht. Dieses Unterlagematerial muss biegsam und dünn genug sein, so dass die Auslenkung nicht verhindert wird. Es muss aber auch stabil genug sein, so dass es nicht bricht oder reißt. Es kann z.B. aus einem Edelmetall wie Gold bestehen. Um eine sichere Haftung des Nano-Materials auf dem Unterlagenmaterial zu gewährleisten, müssen bei der Herstellung entsprechende Vorkehrungen getroffen werden: Bei der Herstellung des Nano-Materials mittels Gasphasenkondensation kann z.B. die Unterlage mit rauer Oberfläche während der Kondensation direkt beschichtet werden, wobei eventuell anschließend eine weitere Verdichtung notwendig ist. Die einfachste Möglichkeit der Herstellung der gewünschten Anordnung mittels Auslaugen besteht im teilweisen Auslaugen eines Legierungsstreifens z.B. aus Gold-Silber-Legierung. Dazu kann der Streifen einseitig mit Lack bedeckt werden, so dass das Herausätzen des Silbers nur von einer Seite erfolgen kann. Falls für die spätere Verwendung ein größerer Spannungsbereich gewünscht wird, empfiehlt sich das Aufwalzen der Legierung auf einen Goldstreifen, wobei dann das Auslaugen vollständig erfolgen kann.

Besonders gut sichtbar wird die Auslenkung eines Doppel-Biegestreifens, der in der Mitte eingeschnitten ist und auf dem sich das nanoporöse Material auf der einen Hälfte auf der Vorderseite, auf der anderen Hälfte auf der Rückseite befindet. Dann erfolgt eine Spreizung oder ein Zusammenführen zwischen den Hälften, so dass die Bewegung z.B. zur Anzeige einer Spannung auch ohne äußeren Bezugspunkt besonders gut sichtbar ist.

Auch eine Bewegung um eine Achse ist mit Hilfe eines solchen Biegestreifens möglich, indem er derart angebracht wird, dass er ein Drehmoment ausübt.

Im Falle von Voltmetern oder Sensoren wird die Kombination mit einem zusätzlichen Detektor zur Registrierung der Ausdehnung oder Auslenkung erstmals vorgeschlagen wie z.B. ein empfindliches Dilatometer, das z.B. mittels induktivem Wegaufnehmer arbeitet, oder ein berührungsloses System mit optischem Positionssensor (Verfolgung der Reflexion eines Laserstrahls z.B. mittels Dioden). Eine Umsetzung der Bewegung in elektrische oder digitale Signale ist mit Technologien möglich, wie sie in etwa Computermäusen verwendet werden.

Im Folgenden wird ein mögliches Verfahren zur Herstellung eines Aktuators bzw. Sensors angegeben, der komplett aus Gold besteht.

Auf ein dünn aufgewalztes Gold wird Gold-Silberlegerung durch wiederholtes Aufwalzen aufgebracht. Alternativ ist auch ein Aufbringen von geschmolzener Gold-Silberlegierung denkbar. Nach dem Walzen und, wenn möglich auch zwischen den Walzschritten, wird ein Weichglühschritt empfohlen (Temperieren des Stückes zum Ausheilen von Versetzungen). Anschließend wird aus der Legierung das Silber herausgelöst, so dass nanoporöses Gold verbleibt.

Funktionsfähige Aktuatoren komplett aus Gold werden mit dem genannten Verfahren hergestellt. Dazu wird Gold auf 0.50 mm und eine Gold-Silber-Legierung (75at% Ag, 25at% Au) auf 2.05 mm ausgewalzt. Die beiden Stücke werden weich geglüht, gereinigt, aufeinandergelegt und zusammen gewalzt. Wenn schon beim ersten gemeinsamen Auswalzen eine ziemlich starke Verformung erreicht wird, kann eine Haftung aneinander erreicht werden (aufeinanderwalzen), danach ist problemloses Weiterwalzen des Werkstücks möglich, z.B. auf den Dickenbereich von 0.3 mm bis 0.005 mm, der zur Herstellung von Biegestreifen mit Auslenkungen im Millimeterbereich geeignet ist.

Das Herausätzen des Silbers erfolgt in einmolarer Perchlorsäure bei Raumtemperatur bei einer Spannung von 1.00 - 1.06 V.

Vorteile des Ganzgoldaktuators:
- Höherer Spannungsbereich im Vergleich zum Aktuator, der noch Gold-Silber-Legierung enthält (aus diesem wird bei zu großen positiven Potentialen Silber herausgelöst).
- Daher kann auch ohne Veränderung des Aktuators und damit beliebig oft eine Reinigung der Oberfläche durch Oxidation erfolgen entweder durch hohe positive Potentiale oder mit oxidierenden Agentien wie Salpetersäure, Chromschwefelsäure, Carosche Säure.
- Daher ist auch ein nicht gekapselter Betrieb möglich.

### Bezugszeichenliste

- 1: nanoskaliges poröses Material
- 2: inertes Trägermaterial
- 2': isolierendes inertes Trägermaterial
- 3: feststehender Träger und Stromzuführung
- 4: Gegenelektrode
- 5: Elektrolyt
- 6: Kraftüberträger
- 7: induktiver Wegaufnehmer

## Patentansprüche

1. Verbundelement bestehend aus mindestens zwei Schichten, von denen eine Schicht aus porösem, elektrisch leitendem, nanoskaligen Material besteht, das von einem Elektrolyten durchdrungen sich bei elektrischer Aufladung dehnt oder kontrahiert, und die andere Schicht aus inertem Trägermaterial besteht, **dadurch gekennzeichnet, dass** das inerte Trägermaterial biegsam ist und gegen Zugbelastung aber weitgehend starr ist.

2. Verbundelement nach Anspruch 1, **dadurch gekennzeichnet, dass** die beiden Schichten langgestreckt und dünn sind.

3. Verbundelement nach Anspruch 2, **dadurch gekennzeichnet, dass** das inerte Trägermaterial elektrisch isolierendes Material ist.

4. Verbundelement nach Anspruch 3, **dadurch gekennzeichnet, dass** die Schicht aus inertem Material auf beiden Seiten mit nanoskaligem Material beschichtet ist.

5. Verbundelement nach Anspruch 1, **dadurch gekennzeichnet, dass** das Verbundelement in allen Dimensionen etwa die gleiche Größenordnung aufweist.

6. Verwendung eines Verbundelements gemäß einem der Ansprüche 1 bis 5 zum Nachweis von Spannungen oder Ionen-Konzentratibnen.

7. Verwendung eines Verbundelements gemäß einem der Ansprüche 1 bis 5 zur gezielten Abgabe bestimmter Ionen.

8. Verwendung eines Verbundelements gemäß Anspruch 5 zum Nachweis von Spannungen oder Ionen-Konzentrationen, wobei zum quantitativen Nachweis der Volumenänderung ein Wegaufnehmer verwendet wird.
